# EUROPEAN PATENT SPECIFICATION

(11) **EP 0 490 855 B1**
(45) Date of publication and mention of the grant of the patent: **20.04.1994**
(21) Application number: 91850310.3
(22) Date of filing: 11.12.1991
(51) Int. Cl.: E02F 9/26, G01V 3/06

(54) **Pointer**
Anzeiger
Indicateur

(30) Priority: 14.12.1990 SE 9004002
(43) Date of publication of application: 17.06.1992
(73) Proprietor: SERVOINDIKATOR HB, S-653 49 Karlstad (SE)
(72) Inventor: Wilgot, Ähs, S-670 41 Koppom (SE)
(74) Representative: Onn, Thorsten

(56) References cited:
- EP-A- 0 046 854
- EP-A- 0 388 568
- US-A- 3 858 737

## Description

The present invention relates to a pointer as attachment to the digging arm of a mechanical excavator or digging machine, or to some other appropriate part of said machine.

Valuable assets are lost annually as a result of severing or destroying underground cables and underground conductors during ground excavating work carried out with the aid of excavating or digging machines. Hitherto, no effective method has been proposed which will enable the extension of underground cables, etc., to be detected and marked-out before commencing the excavation work. For instance, hitherto, the presence of an underground cable has been localized by detecting its magnetic field in accordance with standard methods and determining the position and the geometric extension of the cable on the basis thereof. The extension of the cable is then marked with the aid of pegs driven into the ground. In the case of cables which are not conducting or in the case of waterpipes or optical cables which are either surrounded by a metal screen or include an aluminium strip, the underground object has been detected with the aid of an active transmitter and receiver with the aid of overhead induction, whereafter the position of the cable or conduit is again marked with the aid of pegs driven into the ground.

One drawback is that the pegs become broken or are inadvertantly moved, or quite simply removed, causing uncertainty as to the actual position of the cable. The cable is often severed or dug up even when the pegs remain in position.

The object of the present invention is to provide a pointer which will constantly point ot or indicate the location of an underground cable during an excavating operation, so that the machine operator can avoid cutting through or digging-up the cable or conduit. This object is achieved with a pointer having the characteristic features set forth in the following Claims.

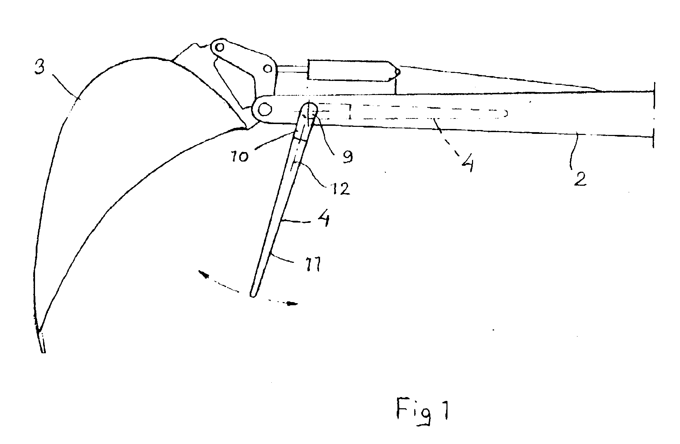

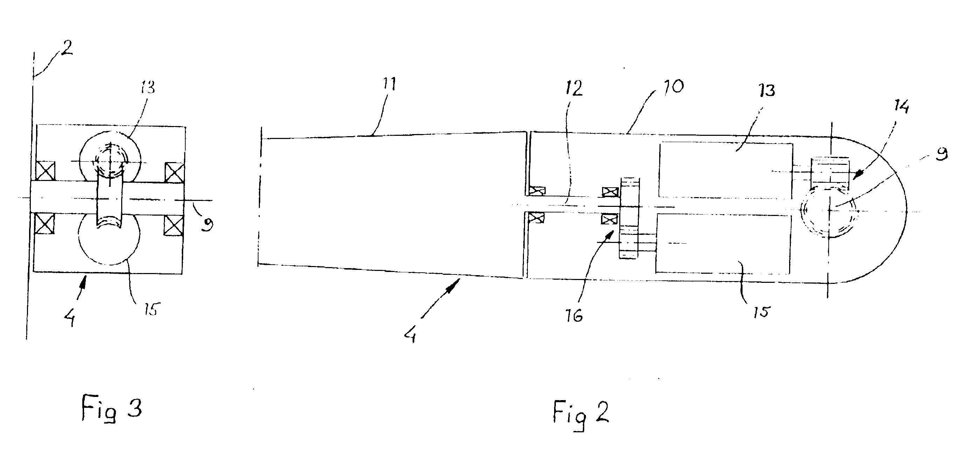

The invention will now be described in more detail with reference to an exemplifying embodiment thereof and also with reference to the accompanying drawings, in which Figure 1 illustrates schematically the inventive pointer attached to the digging arm of an excavating machine; Figure 2 illustrates schematically a detail of the invention; Figure 3 is a schematic sectional view of the detail illustrated in Figure 2; and Figures 4 and 5 are schematic illustrations of the working method of the inventive device.

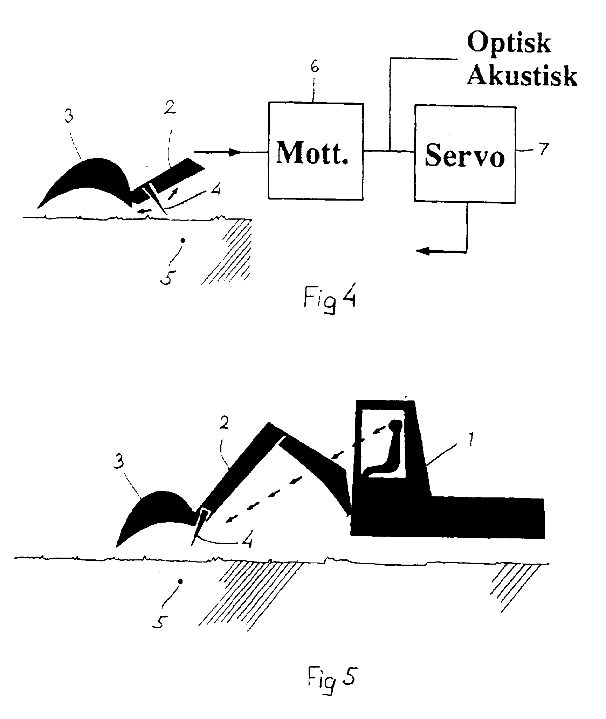

Reference is made first to Figures 4 and 5, which illustrate the method of operation of the invention schematically. A digging arm 2 of an excavating machine 1 carries a bucket 3 which is equipped with a pointer 4 constructed in accordance with the invention. The reference 5 identifies an underground cable. The pointer 4 has the form of an elongated arm which can be swung about an axle which extends generally at right angles to the plane of the paper, by means of a drive means. A receiver 6 receives and converts the signals produced by an antenna system mounted on the pointer 4, the signals received deriving from the magnetic field generated by the cable 5. The receiver output signals are processed in computers and are used to control drive means, in the form of a servomechanism 7, in a manner to position the pointer in the direction in which the strongest magnetic field is detected, i.e. towards the cable 5. Thus, by observing the pointer 4, the machine operator is able to determine the position of the cable 5 precisely during the whole duration of an excavating operation, irrespective of the movement of the digging arm 2 and the bucket 3.

In those cases when the cable 5 is not current-conducting or consists of an optocable, which is normally provided with a metal screen or an aluminium strip, or when the underground object is a water pipe instead of a cable 5, there is used a transmitter for generating a magnetic field whereby an electric current can be induced in the non-conducting cable, the optocable or the water pipe, and the magnetic field generated by this current can be detected in the aforedescribed manner. The transmitter is preferably mounted on the excavating machine.

The principles described briefly above for detecting the presence of an underground cable, pipe or like conductor are well known to the art and form no part of the present invention.

Figure 1 illustrates schematically and in more detail the pointer 4 mounted on the digging arm 2 by means of an axle 9 about which the pointer can be swung or pivoted. In its upwardly swung position, its inactive position, shown in broken lines, the pointer 4 is conveniently positioned beneath a robust metal shield which protects the pointer against damage. The pointer of the illustrated embodiment comprises two parts, i.e. an upper part 10 which is pivotal on the axle 9, and a lower part 11 which is pivotal relative to the upper part 10 on a further axle 12, as described in more detail herebelow with reference to Figures 2 and 3.

Figure 2 illustrates schematically the pointer 4 provided with drive means in the form of two servomotors. One servomotor, 13, is connected to the axle 9 through the intermediary of a worm gear 14. The servo motor 13 thus controls the movement of the pointer 4 on the axle 9 so as to direct the pointer constantly towards the cable 5 during the active function of the pointer.

In addition to wishing to know the underground location of the cable, there is also a need to know the geometric extension of the cable. To this end, the pointer comprises two parts and is provided with a marking at its outer, free end. The end of the pointer may thus be flattened, for instance in a wedge-shape, and provided with an enlarged plate - flag - provided with a colour marking or the like, not shown, so as to obtain a direction indication. The axle 12 is therefore driven by a servomotor 15, through the intermediary of a gear 16, and the axle in turn rotates the lower part 11 of the pointer 4. The characteristics of the magnetic field generated by the cable 5 and indicating the length extension of the cable are also recorded in the receiver 6, which controls the servomotor 15 in a manner such as to rotate the lower pointer-part 11 to a position in which said marking will point to or indicate the direction of the cable.

Thus, the invention enables the machine operator to constantly be aware of the location of an underground cable and also the length extension of said cable. This enables the machine operator to avoid digging-up the cable.

It will be understood that the axle 9 need not extend perpendicularly to the digging arm 2 (perpendicular to the plane of the paper in Figure 1), but may instead be inclined relative to the digging arm. The most essential factor is that the machine operator is able to clearly discern the movements made by the pointer and to see the directions in which the pointer points. The servo motors for effecting movement of the pointer may suitably be driven electrically or hydraulically.

## Claims

1. A pointer (4) as attachment to the digging arm (2) of an excavating machine or to some other appropriate part of the machine, the said pointer comprising an elongated arm which can be pivoted on the digging arm (2) by means of a drive means (13) whose driving movements are activated and controlled by the magnetic field generated by an underground cable (5), conduit or like conductor in a manner such as to cause the pointer (5) to point towards said cable (5), conduit or like conductor independently of the position of the digging arm (2).

2. A pointer according to Claim 1, **characterized** in that the pointer is pivotable around a first, generally horizontal shaft (9).

3. A pointer according to Claim 2, **characterized** in that the pointer is pivotal around a second axle (12) by means of a second drive means (15), said second axle extending generally parallel with the pointer (4), in a manner such that a marker provided on the pointer (4) will indicate the direction in which the cable (5), conduit or like conductor extends.

## Patentansprüche

1. Zeiger (4) als Zusatzeinrichtung am Aushebearm (2) eines Baggers oder an einem anderen geeigneten Bauteil der Maschine, wobei der genannte Zeiger einen länglichen Arm aufweist, der am Aushebearm (2) mittels Antriebsmitteln (13) verschwenkbar ist, deren Antriebsbewegungen durch das Magnetfeld aktiviert und gesteuert werden, das von einem eingegrabenen Kabel (4), einer Rohrleitung oder einer ähnlichen Leitung erzeugt wird, derart, dass der Zeiger (4) auf das genannte Kabel (5), die Rohrleitung bzw. ähnliche Leitung unabhängig von der Stellung des Aushebearms (2) zeigt.

2. Zeiger nach Anspruch 1, dadurch gekennzeichnet, dass der Zeiger um eine erste, allgemein horizontale Achse (9) schwenkbar ist.

3. Zeiger nach Anspruch 2, dadurch gekennzeichnet, dass der Zeiger mittels zweiter Antriebsmittel (15) um eine zweite Achse (12) schwenkbar ist, welche sich allgemein parallel zum Zeiger (4) derart erstreckt, dass eine am Zeiger (4) befindliche Markierung die Richtung anzeigt, in der sich das Kabel (5), die Rohrleitung bzw. die andere Leitung erstreckt.

## Revendications

1. Aiguille indicatrice (4) comme dispositif additionnel de la flèche (2) d'un excavateur ou d'une autre partie appropriée de la machine, la dite aiguille comprenant un bras allongé pouvant être pivoté sur la flèche (2) au moyen d'un dispositif d'entraînement (13) dont les mouvements d'entraînement sont activés et contrôlés par le champ magnétique engendré par un câble souterrain (5), un conduit ou un conducteur similaire, de façon à ce que l'aiguille (4) pointe vers le dit câble (5), le conduit ou le conducteur similaire indépendamment de la position de la flèche (2).

2. Aiguille selon la revendication 1, caractérisée en ce que l'aiguille est apte à pivoter autour d'un premier axe (9) disposé généralement horizontalement.

3. Aiguille selon la revendication 2, caractérisée en ce que l'aiguille est apte à pivoter autour d'un second axe (12) au moyen d'un second dispositif d'entraînement (15), le dit second axe s'étendant généralement parallèlement à l'aiguille (4), de façon à ce qu'un répère disposé sur l'aiguille (4) indiquera la direction dans laquelle s'étend le câble (5), le conduit ou le conducteur similaire.
